# EUROPEAN PATENT APPLICATION

(11) **EP 4 477 290 A1**
(43) Date of publication of application: **18.12.2024**
(21) Application number: 23179375.3
(22) Date of filing: 15.06.2023
(51) Int. Cl.: B01D 53/04

(54) **ADSORPTION SEGMENT FOR DIRECT AIR CAPTURE UNIT**

(71) Applicant: Siemens Energy Global GmbH & Co. KG, 81739 München (DE)
(72) Inventor: Svensson, Oscar, 582 55 Linköping (SE); Jaksch, Peter, 60211 Norrköping (SE); Hjalmarsson, Christer, 61291 Finspong (SE)

(57) **Abstract**

An adsorption segment (304) includes a filter plate (414) including a filter layer (602), the filter layer (602) including a first mesh (604) having a first thickness, the first mesh (604) defining a plurality of first flow passages through the first thickness, the plurality of first flow passages selected to allow passing through an air flow (122), a second mesh (606) having a second thickness, the second mesh (606) defining a plurality of second flow passages through the second thickness, the plurality of second flow passages selected to allow passing through the air flow (122), the second mesh (606) bonded with the first mesh (604) to define a plurality of pockets (608), each pocket (608) separated from the remaining pockets (608), a sorbent (610) positioned in each pocket (608) and selected to adsorb carbon dioxide from the air flow (122), and a frame (402), the filter plate (414) being folded in the frame (402).

## Description

### BACKGROUND

Gas separation by adsorption is an industrial method for the removal of a specific gaseous component from a gas mixture. One application is removal of carbon dioxide (CO₂) from gas streams such as, flue or exhaust gases, industrial waste gases, biogas, or even atmospheric air. The process for CO₂ capturing from air is known as direct air capture. The direct air capture process is to have a solid sorbent to which the CO₂ molecules can adsorb through reactions with amine groups. During adsorption, air needs to be moved around a sorbent to provide the CO₂ that can be adsorbed. During desorption, the sorbent needs to be enclosed in a container so that the released CO₂ can be captured. To desorb, the temperature of the sorbent container is raised, and the partial pressure of the CO₂ is lowered. The latter can be done by purging with another medium and/or lowering the absolute pressure in the sorbent container.

Typically, steam is used for both purging and heating of the sorbent. At the start of the desorption phase, the air pressure in the sorbent container is lower by use of a vacuum pump, thereby lowering the amount of air that is mixed with the CO₂ to be delivered by the direct air capture unit. Fan which is needed for moving air flow, such as ambient air, is one of the major power consumers. The other major consumer is the power needed to supply the heat needed for desorption. The service cost for exchange of sorbent is the other one of the major frequent recurrent operational expenses, both in terms of labor and downtime of the direct air capture unit.

### BRIEF SUMMARY

In one aspect, an adsorption segment includes a filter plate including a filter layer, the filter layer including a first mesh having a first thickness, the first mesh defining a plurality of first flow passages through the first thickness, the plurality of first flow passages selected to allow passing through an air flow, a second mesh having a second thickness, the second mesh defining a plurality of second flow passages through the second thickness, the plurality of second flow passages selected to allow passing through the air flow, the second mesh bonded with the first mesh to define a plurality of pockets, each pocket separated from the remaining pockets, a sorbent positioned in each pocket and selected to adsorb carbon dioxide from the air flow, and a frame, the filter plate being folded in the frame.

In one aspect, a device for manufacturing a filter layer, the device including a first roller having a first circumferential edge and a first circumferential region that has a smaller diameter than the first circumferential edge, a second roller having a second circumferential edge and a second circumferential region that has a smaller diameter than the second circumferential edge, the first roller and the second roller positioned adjacent one another such that the first circumferential edge and the second circumferential edge and the first circumferential region and the second circumferential region are aligned to one another, and a sealer positioned at a distance from the first roller and the second roller.

In one aspect, a method for manufacturing a filter plate, the method including feeding a first mesh and a second mesh between a first roller and a second roller to bond the first mesh with the second mesh forming a first seal, a pocket formed between the first mesh and the second mesh, injecting a sorbent into the pocket by a tube arranged between the first roller and the second roller, and sealing the pocket by a sealer forming a second seal that is not parallel to the first seal.

### BRIEF DESCRIPTION OF THE DRAWINGS

To easily identify the discussion of any particular element or act, the most significant digit or digits in a reference number refer to the figure number in which that element is first introduced.
FIG. 1 illustrates a perspective external view of a direct air capture unit.
FIG. 2 illustrates a perspective internal view of the direct air capture unit of FIG. 1.
FIG. 3 illustrates a perspective view of an adsorption container of the direct air capture unit of FIG. 1.
FIG. 4 illustrates a perspective view of an adsorption segment of the adsorption container of FIG. 3.
FIG. 5 illustrates a section view of the adsorption segment of FIG. 4.
FIG. 6 illustrates a section view of a filter plate of the adsorption segment of FIG. 4.
FIG. 7 illustrates a section view of a further filter plate of the adsorption segment of FIG. 4.
FIG. 8 illustrates a section view of another further filter plate of the adsorption segment of FIG. 4.
FIG. 9 illustrates a section view of yet another further filter plate of the adsorption segment of FIG. 4.
FIG. 10 illustrates a pattern of pockets of the filter plate of the adsorption segment of FIG. 4.
FIG. 11 illustrates a pattern of pockets of the filter plate of the adsorption segment of FIG. 4.
FIG. 12 illustrates a pattern of pockets of the filter plate of the adsorption segment of FIG. 4.
FIG. 13 illustrates a pattern of pockets of the filter plate of the adsorption segment of FIG. 4.
FIG. 14 illustrates a pattern of pockets of the filter plate of the adsorption segment of FIG. 4.
FIG. 15 illustrates a pattern of pockets of the filter plate of the adsorption segment of FIG. 4.
FIG. 16 illustrates a perspective view of a device for manufacturing the filter plate.
FIG. 17 illustrates a perspective view of a device for manufacturing the filter plate.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including", "having", and "comprising", as well as derivatives thereof, mean inclusion without limitation. The singular forms "a", "an", and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith" as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

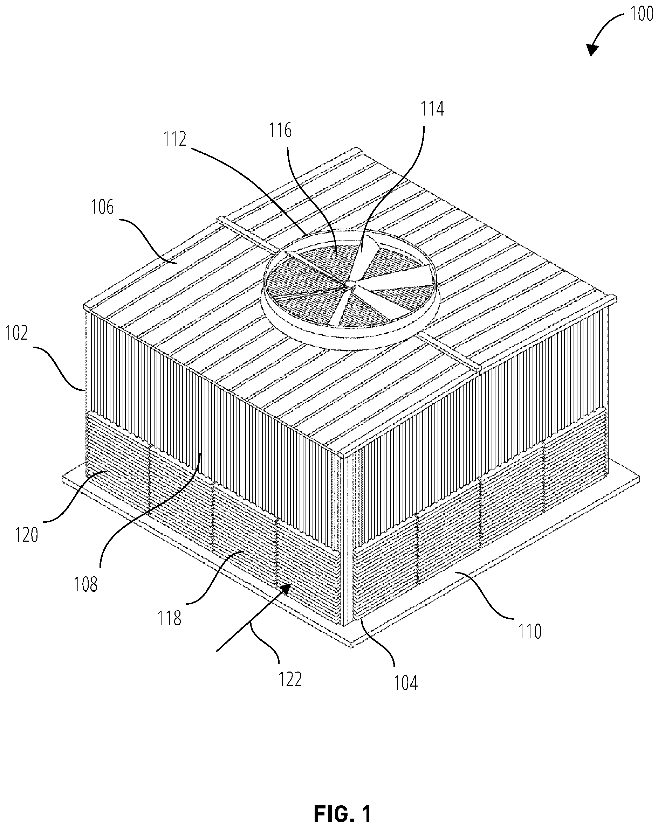

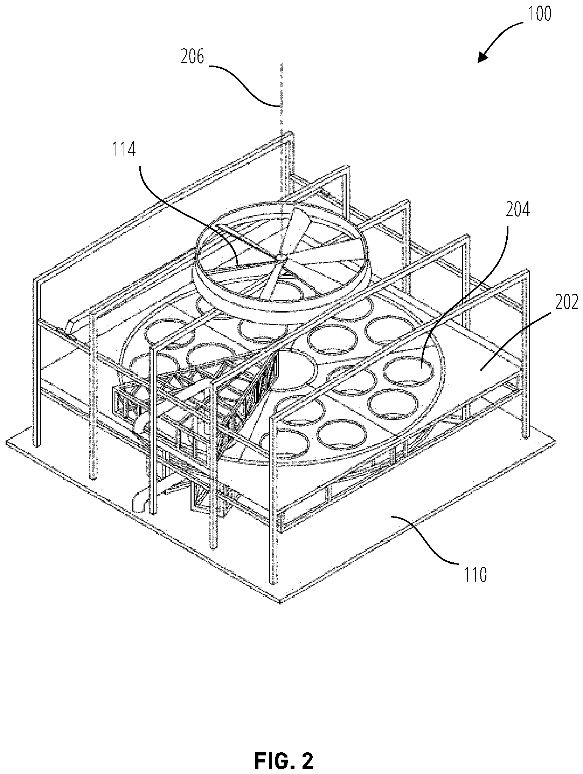

FIG. 1 illustrates a perspective external view of a direct air capture unit 100. The direct air capture unit 100 includes a housing 102 that encloses a plurality of internal components which are shown in FIG. 2. In the illustrated embodiment, the direct air capture unit 100 is a cuboid. In other embodiments, the direct air capture unit 100 may have shapes other than cuboid, such as cube, pentagonal prism, hexagonal prism, cylinder, etc.

The housing 102 has a bottom surface 104, a top surface 106 opposite to the bottom surface 104, and a side surface 108 extending between the bottom surface 104 and the top surface 106. The bottom surface 104 is placed on a ground surface 110. The top surface 106 has an opening 112 in which a fan 114 is placed. A louver panel 116 is also placed in the opening 112 to inhibit water from entering the housing 102. The side surface 108 has a plurality of louvered sidings 118 that are placed adjacent to each other. Each louvered siding 118 of the plurality of louvered sidings 118 has a plurality of gaps 120 to allow an air flow 122 entering the housing 102. The air flow 122 includes ambient air.

FIG. 2 illustrates a perspective internal view of the direct air capture unit 100 of FIG. 1 with the housing 102 being removed for illustration purpose. The direct air capture unit 100 has a sorbent bed 202. A central axis 206 extends from a center of the sorbent bed 202. The sorbent bed 202 has a circular shape, with other configurations possible, such as rectangular, square, oval, etc.

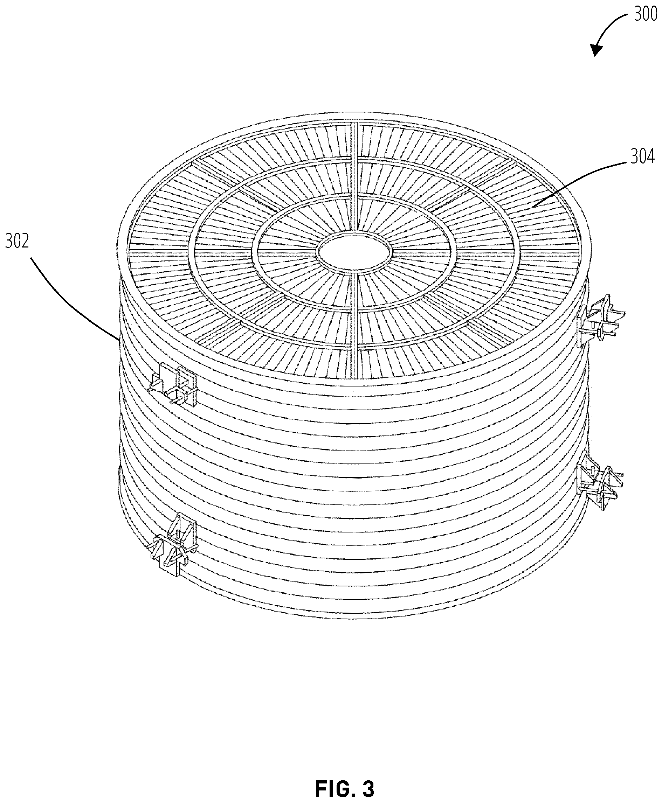

The sorbent bed 202 has a plurality of holes 204 circumferentially distributed in the sorbent bed 202 with respect to the central axis 206. Each hole 204 of the plurality of holes 204 has a cylindrical shape, with other configurations possible, such as cuboid, cube, pentagonal prism, hexagonal prism, etc. The plurality of holes 204 are circumferentially arranged in two distinct circles in the sorbent bed 202. In other embodiments, the plurality of holes 204 may be circumferentially arranged in one circle or more than circles in the sorbent bed 202. An adsorption container 300 (shown in FIG. 3) can be installed in each hole 204 for adsorbing carbon dioxide in the air flow 122 when the air flow 122 flows through the adsorption container 300.

FIG. 3 illustrates a perspective view of an adsorption container 300 of the direct air capture unit 100 of FIG. 1. The adsorption container 300 has a shell 302. The shell 302 is a solid structure. The shell 302 is made from corrugated steel, with other materials possible. The adsorption container 300 has a cylindrical shape. In other embodiments, the adsorption container 300 may have different shapes, such as cuboid, cube, pentagonal prism, hexagonal prism, etc.

The adsorption container 300 has a plurality of adsorption segments 304 that are arranged within the shell 302. In the illustrated embodiment, the adsorption container 300 has twenty adsorption segments 304. In other embodiments, the adsorption container 300 may have more or less than twenty adsorption segments 304 as desired.

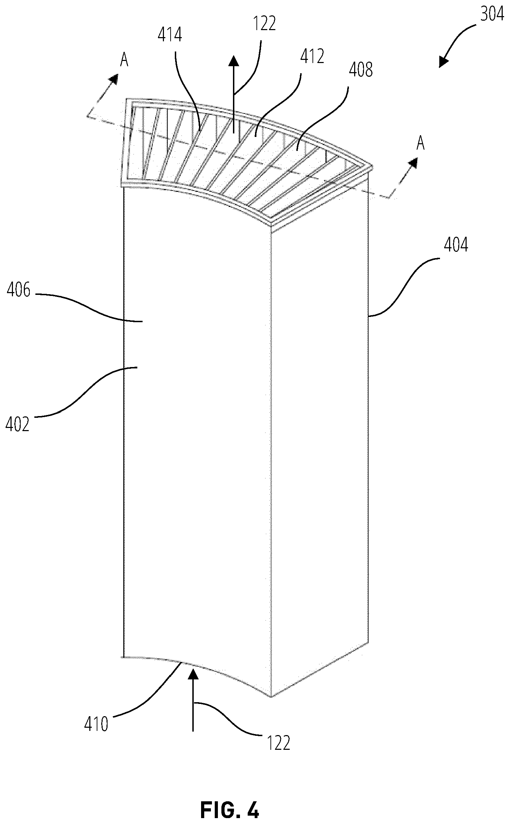

FIG. 4 illustrates a perspective view of one adsorption segment 304 of the plurality of adsorption segments 304 of FIG. 3. The adsorption segment 304 includes a frame 402. The frame 402 has a first closed side 404 and a second closed side 406 that is opposite to the first closed side 404. A hollow interior 408 is defined between the first closed side 404 and the second closed side 406.

The frame 402 has a first open side 410 and a second open side 412 that is opposite to the first open side 410 for the air flow 122 passing through the adsorption segment 304. A filter plate 414 is installed in the hollow interior 408 of the frame 402.

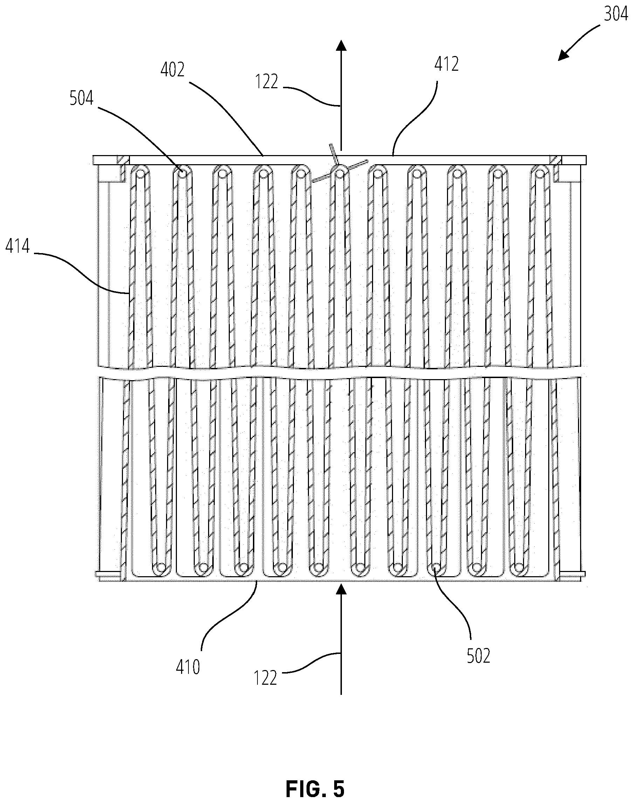

FIG. 5 illustrates a section view of the adsorption segment 304 of FIG. 4 along a direction of A-A. The adsorption segment 304 has a plurality of first rods 502 that are disposed at the first open side 410 between the first closed side 404 and the second closed side 406 and a plurality of second rods 504 that are disposed at the second open side 412 between the first closed side 404 and the second closed side 406. The plurality of first rods 502 and the plurality of second rods 504 are offset from one another along the first open side 410 and the second open side 412.

The filter plate 414 is a single continues plate. The filter plate 414 is folded alternatively over the plurality of first rods 502 and the plurality of second rods 504 forming an undulating profile along the first open side 410 and the second open side 412. Two adjacent portions of the filter plate 414 form a V shape between the first open side 410 and the second open side 412. The filter plate 414 has a thickness between 5 mm to 25 mm, preferably between 5 mm to 15 mm, with other dimensions possible.

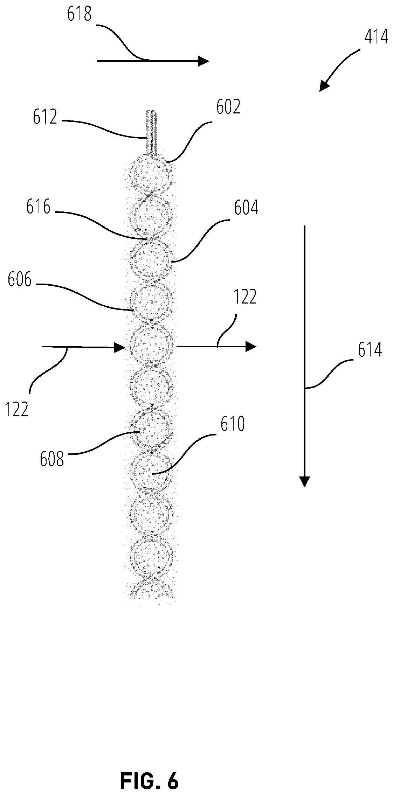

FIG. 6 illustrates a section view of the filter plate 414 of the adsorption segment 304 of FIG. 4. The filter plate 414 is installed in the frame 402 in a vertical direction. The filter plate 414 includes a filter layer 602 having a first mesh 604 and a second mesh 606. The first mesh 604 has a first thickness and the second mesh 606 has a second thickness. The first mesh 604 is made of a first porous material having a plurality of first apertures across the first thickness which define a plurality of first flow passages. The second mesh 606 is made of a second porous material having a plurality of second apertures across the second thickness that define a plurality of second flow passages. The first mesh 604 and the second mesh 606 include wires to define the plurality of first apertures and the plurality of second apertures. The wire has a diameter between 0.05 mm to 0.2 mm, the plurality of first apertures and the plurality of second apertures have a diameter between 0.2 mm to 0.5 mm, with other dimensions possible. The first mesh 604 and the second mesh 606 may be made from the same material, such as synthetic fibers of polyamide mesh, stainless steel mesh, aluminum mesh, etc. The first mesh 604 and the second mesh 606 may be made from different materials.

The first mesh 604 and the second mesh 606 are bonded together at a plurality of separated bonding locations 616 along a length direction 614. A plurality of pockets 608 are defined between the first mesh 604 and second mesh 606 and are separated from each other by the plurality of bonding locations 616. The first mesh 604 and the second mesh 606 may be bonded together by any suitable methods, such as ultrasound welding, heat wedge welding, sewing, or glue.

Each pocket 608 of the plurality of pockets 608 is filled with a quantity of sorbent 610. The sorbent 610 fills a first volume within the pocket 608 when the sorbent 610 has not adsorbed water. The sorbent 610 swells when the sorbent 610 has adsorbed water. The sorbent 610 then fills a second volume within the pocket 608. The second volume is larger than the first volume. In the embodiment illustrated in FIG. 6, the sorbent 610 is fully filled within the pocket 608. A volume of the pocket 608 changes in response to the volume change of the sorbent 610 which changes with the water content. The first mesh 604 and the second mesh 606 are made of stretching materials that allow the volume change of the pocket 608. The sorbent 610 includes granular materials and amine-based materials, with other materials possible. The sorbent 610 is formed in bead type, such as spherical bead type, with other types possible. A diameter of the spherical bead type is between 0.1 mm to 1.5 mm, with other dimensions possible.

The filter layer 602 has a width defined between the first mesh 604 and the second mesh 606 in a width direction 618. The air flow 122 passes through the filter layer 602 in the width direction 618. The width varies along the length direction 614 having a plurality of minimums and a plurality of maximums in an alternative manner. The plurality of minimums are at the plurality of bonding locations 616. The plurality of maximums are between adjacent minimums.

A peripheral border 612 is defined at a peripheral area of the filter layer 602. The peripheral border 612 are formed by bonding the first mesh 604 and the second mesh 606 together in a designed length without pocket 608 therebetween. The peripheral border 612 can be used for embedment of structural elements, such as steel wires.

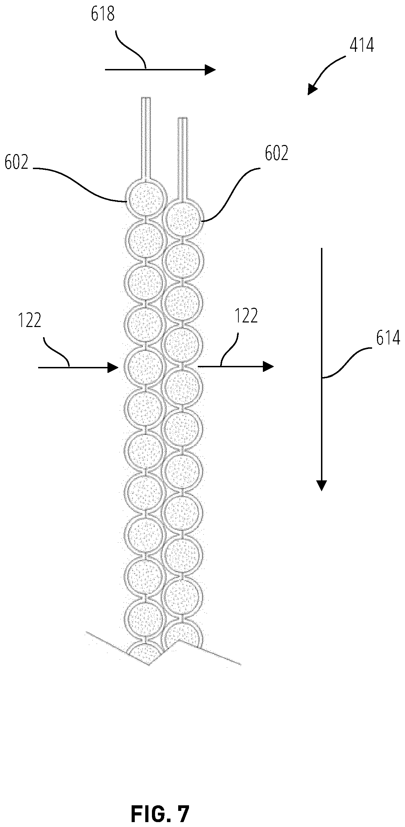

FIG. 7 illustrates a section view of a further filter plate 414 of the adsorption segment 304 of FIG. 4. The filter plate 414 is installed in the frame 402 in a vertical direction. The filter plate 414 includes a first filter layer 602 and a second filter layer 602. The first filter layer 602 and the second filter layer 602 are the same, with other configurations possible. The second filter layer 602 is attached to the first filter layer 602 with the plurality of minimums of the filter layer 602 align with the plurality of maximums of the first filter layer 602 in the width direction 618. The filter plate 414 thus has a substantial even width along the length direction 614 compared with the filter plate 414 having a single filter layer 602 in FIG. 6. The filter plate 414 of FIG. 7 reduces the chance of the air flow 122 bypassing the sorbent 610.

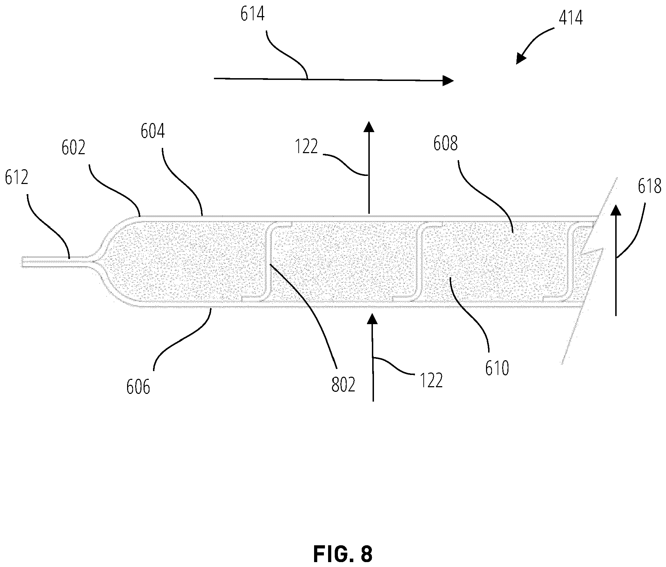

FIG. 8 illustrates a section view of another further filter plate 414 of the adsorption segment 304 of FIG. 4. The filter plate 414 is installed in the frame 402 in a horizontal direction. the filter plate 414 has a filter layer 602. The filter layer 602 includes a first mesh 604 and a second mesh 606 that are bonded together by a plurality of walls 802 disposed between the first mesh 604 and the second mesh 606. The plurality of pockets 608 are defined between the first mesh 604, the second mesh 606, and the plurality of walls 802. The plurality of walls 802 make the filter layer 602 having a substantial even width along the length direction 614. In the embodiment illustrated in FIG. 8, the plurality of walls 802 have a linear shape between the first mesh 604 and the second mesh 606 and are perpendicular to the first mesh 604 and the second mesh 606. In other embodiments, the plurality of walls 802 may have non-linear shape between the first mesh 604 and the second mesh 606 and/or have an oblique angle with respect to the first mesh 604 and the second mesh 606, respectively.

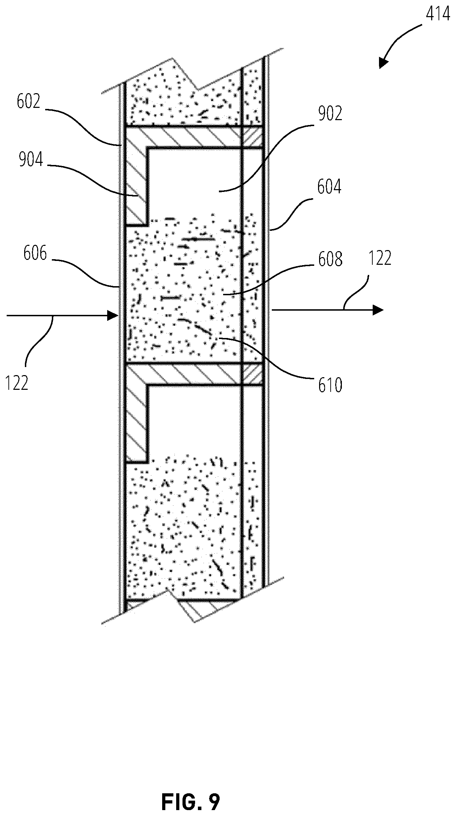

FIG. 9 illustrates a section view of yet another further filter plate 414 of the adsorption segment 304 of FIG. 4. The filter plate 414 is installed in the frame 402 in a vertical direction. The filter plate 414 has a filter layer 602. The filter layer 602 includes a plurality of pockets 608 between a first mesh 604 and a second mesh 606. Each pocket 608 of the plurality of pockets 608 is filled with the sorbent 610. The air flow 122 passes through the sorbent 610 from the first mesh 604 to the second mesh 606.

The pocket 608 is partially filled with the sorbent 610 which defines a cavity 902 within the pocket 608. The sorbent 610 swells when the sorbent 610 has adsorbed water. The cavity 902 allows the sorbent 610 to swell. A volume of the pocket 608 is not changed in response to the volume change of the sorbent 610. This feature brings benefit when the first mesh 604 and the second mesh 606 are made of stiffer materials.

A portion of the pocket 608 is coved by a solid plate 904. The portion is a part of the first mesh 604 that is an edge of the cavity 902. The solid plate 904 inhibits the air flow 122 flowing through the cavity 902 and forces the air flow 122 to pass through the sorbent 610. In the embodiment illustrated in FIG. 9, the solid plate 904 is installed on an inner surface of the first mesh 604 inside the pocket 608. It is possible that the solid plate 904 may be installed on an outer surface of the first mesh 604 outside of the pocket 608.

FIG. 6 to FIG. 9 illustrate the filter plate 414 is installed in the frame 402 in either a vertical direction or a horizontal direction. In other embodiments, the filter plate 414 may be oriented in an oblique direction, or any desired directions.

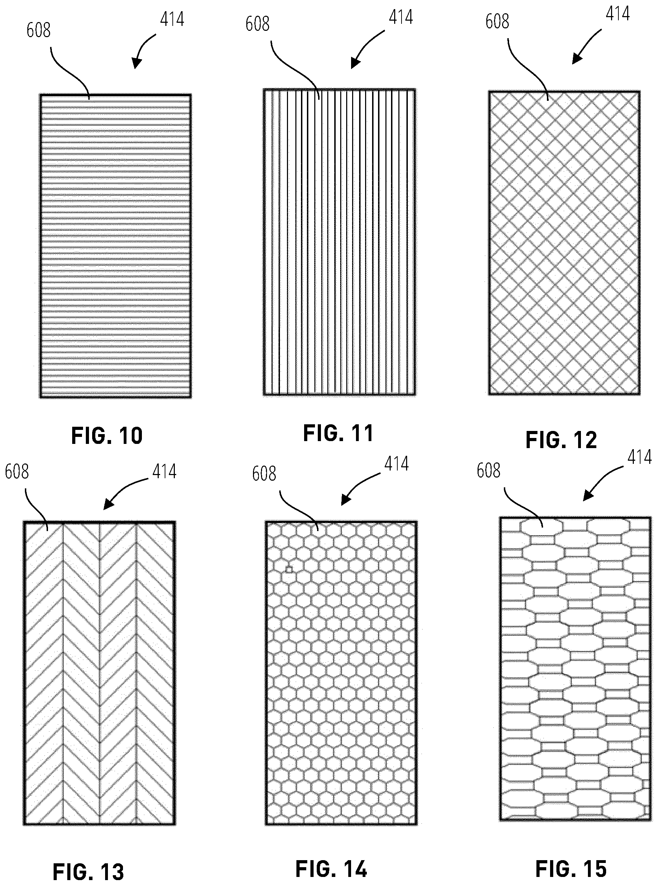

The plurality of pockets 608 forms a pattern on the filter plate 414. FIG. 10 illustrates the plurality of pockets 608 forms a horizontal pattern. FIG. 11 illustrates the plurality of pockets 608 forms a vertical pattern. FIG. 12 illustrates the plurality of pockets 608 forms a cross pattern. FIG. 13 illustrates the plurality of pockets 608 forms a fish bone pattern. FIG. 14 illustrates the plurality of pockets 608 forms a honeycomb pattern. FIG. 15 illustrates the plurality of pockets 608 forms an elongated honeycomb pattern. It is possible that the pockets 608 may form any other patterns that are desired.

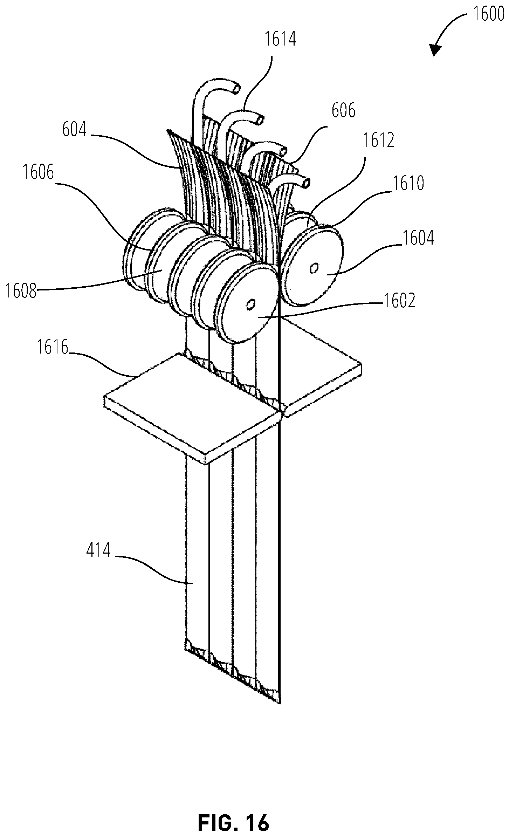

FIG. 16 illustrates a perspective view of a device 1600 for manufacturing a filter plate 414 of the adsorption segment 304 of FIG. 4. The device 1600 includes a plurality of first rollers 1602 and a plurality of second rollers 1604. The plurality of first rollers 1602 are separated from and arranged next to each other. The plurality of second rollers 1604 are separated from and arranged next to each other.

Each first roller 1602 of the plurality of first rollers 1602 includes a first circumferential edge 1606 and a first circumferential region 1608 that has a smaller diameter than the first circumferential edge 1606. The first circumferential region 1608 is located between the first circumferential regions 1608 of adjacent first rollers 1602. Each second roller 1604 of the plurality of second rollers 1604 includes a second circumferential edge 1610 and a second circumferential region 1612 that has a smaller diameter than the second circumferential edge 1610. The second circumferential region 1612 is located between the second circumferential edges 1610 of adjacent second rollers 1604. The plurality of first rollers 1602 and the plurality of second roller 1604 are positioned adjacent one another such that each first circumferential edge 1606 is aligned with a respective second circumferential edge 1610 and each first circumferential region 1608 is aligned with a respective second circumferential region 1612. The plurality of first rollers 1602 and the plurality of second rollers 1604 are V-shaped rollers, with other configurations possible.

A plurality of tubes 1614 are positioned between the plurality of first rollers 1602 and the plurality of second rollers 1604. Each tube 1614 of the plurality of tubes 1614 is positioned at one first circumferential region 1608 of the plurality of first circumferential regions 1608 and one second circumferential region 1612 of the plurality of second circumferential regions 1612.

A sealer 1616 is positioned at a distance from the plurality of first rollers 1602 and the plurality of second rollers 1604. The sealer 1616 can be any suitable sealing machines to seal the first mesh 604 and the second mesh 606.

In manufacturing process, a first mesh 604 and a second mesh 606 are fed between the plurality of first rollers 1602 and the plurality of second rollers 1604. The plurality of first circumferential edge 1606 and the plurality of second circumferential edge 1610 bond the first mesh 604 with the second mesh 606 forming a plurality of first seals. A plurality of pockets 608 are formed between the first mesh 604, the second mesh 606, and the plurality of first seals. The sorbent 610 is filled into the plurality of pockets 608 through the plurality of tubes 1614. The sealer 1616 seals the first mesh 604 and the second mesh 606 forming a second seal when a designed length of the pockets 608 reaches. The second seal is not parallel to the first seals. The filter plate 414 is cut when a designed length of the filter plate 414 reaches.

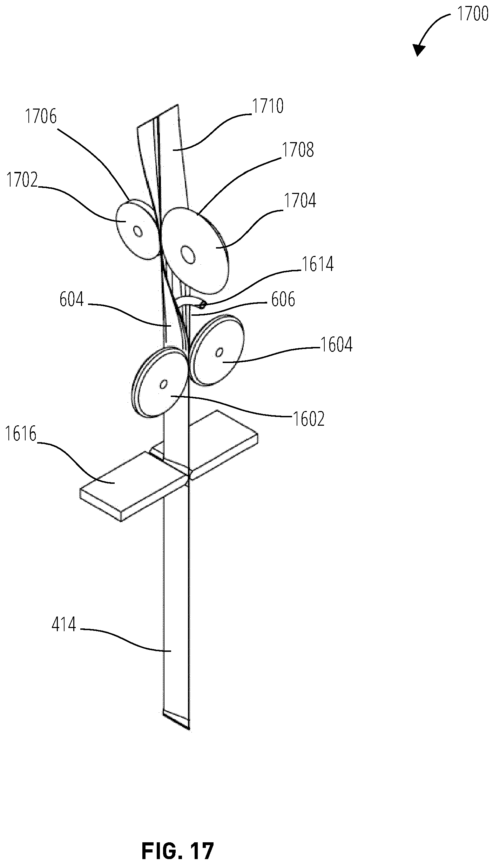

FIG. 17 illustrates a perspective view of a device 1700 for manufacturing a filter plate 414 of the adsorption segment 304 of FIG. 4. The device 1700 includes a third roller 1702 and a fourth roller 1704 that are disposed at a distance from the first roller 1602 and the second roller 1604. The third roller 1702 and fourth roller 1704 are oriented perpendicular to the first roller 1602 and the second roller 1604. The tube 1614 is disposed between the third roller 1702 and the fourth roller 1704 and the first roller 1602 and the second roller 1604.

The third roller 1702 includes a third circumferential edge 1706. The fourth roller 1704 includes a fourth circumferential edge 1708. The third roller 1702 and the fourth roller 1704 are positioned adjacent one another such that the third circumferential edge 1706 and the fourth circumferential edge 1708 are aligned to one another. The third roller 1702 and the fourth roller 1704 are V-shaped rollers, with other configurations possible.

In manufacturing process, a mesh 1710 is fed between the third roller 1702 and the fourth roller 1704. The mesh 1710 is folded by the third circumferential edge 1706 and the fourth circumferential edge 1708 to a first mesh 604 and second mesh 606. The first roller 1602 and the second roller 1604 bonds the first mesh 604 with the second mesh 606 forming a first seal. A pocket 608 is formed between the first mesh 604, the second mesh 606, and the first seal. The sorbent is filled into the pocket 608 through the tube 1614. The sealer 1616 seals the first mesh 604 and the second mesh 606 forming a second seal when a designed length of the pocket 608 reaches. The second seal is not parallel to the first seal. The filter plate 414 is cut when a designed length of the filter plate 414 reaches.

The device 1700 includes one first roller 1602 and one second roller 1604 to form a single pocket 608 in a row. It is possible that the device 1700 may have a plurality of first rollers 1602 and a plurality of second rollers 1604 to form a plurality of pockets 608 in a row.

During operation, the air flow 122 is drawn by the fan 114 into the housing 102 of the direct air capture unit 100 through the louvered sidings 118. The air flow 122 is then drawn by the fan 114 into the plurality of frames 402 of the plurality of adsorption segments 304. The air flow 122 contacts the sorbent 610 in the filter plate 414 installed in the plurality of adsorption segments 304 to adsorb the CO₂. After adsorption, the air flow 122 is drawn by the fan 114 to exit the direct air capture unit 100 through the opening 112.

Each frame 402 of the plurality of frames 402 allows the filter plate 414 to be easily installed inside the adsorption container 300 and rapidly replaced when needed. During replacement, the filter plate 414 is removed from the frame 402 and a new filter plate 414 is installed into the frame 402 so that the frame 402 is reused. The rapid replacement of the filter plate 414 reduces the downtime of the direct air capture unit 100 and reduces installation time of a new or refurbished direct air capture unit 100. The filter plate 414 can be changed in some adsorption segments 304 or some adsorption containers 300 while the adsorption process is performing in the remaining adsorption segments 304 or the remaining adsorption containers 300.

The filter plate 414 is installed in the frame 402 around the plurality of first rods 502 and the plurality of second rods 504 in an undulating profile which allows more mass of sorbent 610 being contained within the frame 402 and at the same time the less thickness of the filter plate 414 and less pressure drop. For example, the thickness of the filter plate 414 is between 5 mm to 15 mm, the pressure drop through the filter plate 414 is between 100 Pa to 350 Pa, preferably between 100 Pa to 250 Pa, the area of the filter plate 414 and mass of the sorbent 610 within the frame 402 are increased due to the undulating profile. As such, the electrical power that is needed to operate the direct air capture unit 100 is reduced which is based on the area and the thickness of the filter plate 414. The undulating profile of the filter plate 414 also allows a higher sorbent 610 to frame 402 mass ratio which reduces thermal mass inside of the frame 402. This allows more energy savings during the desorption process.

The design of the filter plate 414 allows the filter plate 414 operating under a harsh conditions and withstanding medias, such as water, steam, CO₂, ambient air, etc., in a cyclic process. The cyclic process may repeat many thousands of times per year, for example, over 8000 cycles per year. The operation temperature of the filter plate 414 can be between -20°C to 100°C, the absolute operation pressure can be between 0.02 Bar to 1 Bar.

During operation, the sorbent 610 may be replaced in a shorter period of time, such as every one to three years. The frame 402, the first mesh 604, and the second mesh 606 may be replaced in a longer period of time, such as every twenty to twenty five years.

The device 1600 and device 1700 allow an automated and continues filling the sorbent 610 and manufacturing the filter plate 414. A production cost of the filter plate 414 is thus reduced.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. An adsorption segment (304) comprising:
a filter plate (414) comprising a filter layer (602), the filter layer (602) comprising:
a first mesh (604) having a first thickness, the first mesh (604) defining a plurality of first flow passages through the first thickness, the plurality of first flow passages selected to allow passing through an air flow (122);
a second mesh (606) having a second thickness, the second mesh (606) defining a plurality of second flow passages through the second thickness, the plurality of second flow passages selected to allow passing through the air flow (122), the second mesh (606) bonded with the first mesh (604) to define a plurality of pockets (608), each pocket (608) separated from the remaining pockets (608);
a sorbent (610) positioned in each pocket (608) and selected to adsorb carbon dioxide from the air flow (122); and
a frame (402), the filter plate (414) being folded in the frame (402).

2. The adsorption segment (304) of claim 1, wherein the air flow (122) passes through the filter layer (602) in a width direction (618), wherein a width of the filter layer (602) varies along a length direction (614) to define a plurality of minimums and a plurality of maximums, and wherein the filter plate (414) further comprises a second filter layer (602) that is attached to the filter layer (602) with the plurality of minimums of the second filter layer (602) align with the plurality of maximums of the first filter layer (602).

3. The adsorption segment (304) of claim 1 or 2, wherein the filter layer (602) comprises a plurality of walls (802) that are disposed between the first mesh (604) and the second mesh (606) to bond the first mesh (604) with the second mesh (606) and to define the plurality of pockets (608).

4. The adsorption segment (304) of any one of claims 1 to 3, wherein the plurality of pockets (608) forms a pattern, and wherein the pattern is selected from the group consisting of a horizontal pattern, a vertical pattern, a cross pattern, a fish bone pattern, a honeycomb pattern, and an elongated honeycomb pattern.

5. The adsorption segment (304) of any one of claims 1 to 4, wherein each pocket (608) contains a quantity of sorbent (610) that fills a first volume when the sorbent (610) has not adsorbed water, wherein the sorbent (610) fills a second volume when the sorbent (610) has adsorbed water, and where the second volume is larger than the first volume.

6. The adsorption segment (304) of claim 5, wherein a volume of the pocket (608) changes in response to a volume change of the sorbent (610) from the first volume to the second volume.

7. The adsorption segment (304) of any one of claims 1 to 6, wherein a portion of each pocket (608) of the plurality of pockets (608) is covered by a solid plate (904).

8. The adsorption segment (304) of any one of claims 1 to 7, wherein the filter layer (602) comprises a peripheral border (612) formed by solidly bonding a peripheral area of the first mesh (604) and the second mesh (606).

9. The adsorption segment (304) of any one of claims 1 to 8, wherein the frame (402) comprises:
a first closed side (404),
a second closed side (406) opposite to the first closed side (404),
a first open side (410),
a second open side (412) opposite to the first open side (410),
a plurality of first rods (502) disposed at the first open side (410) between the first closed side (404) and the second closed side (406),
a plurality of second rods (504) disposed at the second open side (412) between the first closed side (404) and the second closed side (406), wherein the filter plate (414) is a single continues plate and is folded alternatively over the plurality of first rods (502) and the plurality of second rods (504) forming an undulating profile.

10. The adsorption segment (304) of claim 9, wherein the plurality of first rods (502) and the plurality of second rods (504) are offset from one another along the first open side (410) and the second open side (412).

11. A device (1600, 1700) for manufacturing a filter plate (414), the device (1600, 1700) comprising:
a first roller (1602) having a first circumferential edge (1606) and a first circumferential region (1608) that has a smaller diameter than the first circumferential edge (1606);
a second roller (1604) having a second circumferential edge (1610) and a second circumferential region (1612) that has a smaller diameter than the second circumferential edge (1610), the first roller (1602) and the second roller (1604) positioned adjacent one another such that the first circumferential edge (1606) and the second circumferential edge (1610) and the first circumferential region (1608) and the second circumferential region (1612) are aligned to one another, wherein the first circumferential edge (1606) and the second circumferential edge (1610) form a first seal;
a tube (1614) arranged between the first roller (1602) and the second roller (1604); and
a sealer (1616) positioned at a distance from the first roller (1602) and the second roller (1604), wherein the sealer (1616) forms a second seal that is not parallel to the first seal.

12. The device (1600, 1700) of claim 11, wherein the first roller (1602) comprises a plurality of separated first rollers (1602) arranged next to each other, wherein each of the separated first rollers (1602) comprises a first circumferential edge (1606) and a first circumferential region (1608) that has a smaller diameter than the first circumferential edge (1606), wherein the second roller (1604) comprises a plurality of separated second rollers (1604) arranged next to each, and wherein each of the separated second rollers (1604) comprises a second circumferential edge (1610) and a second circumferential region (1612) that has a smaller diameter than the second circumferential edge (1610).

13. The device (1600, 1700) of claim 11 or 12, further comprising a third roller (1702) and a fourth roller (1704) disposed at a distance from the first roller (1602) and the second roller (1604) and oriented perpendicular to the first roller (1602) and the second roller (1604), wherein the third roller (1702) comprises a third circumferential edge (1706) and the fourth roller (1704) comprises a fourth circumferential edge (1708), and wherein the third roller (1702) and the fourth roller (1704) are positioned adjacent one another such that the third circumferential edge (1706) and the fourth circumferential edge (1708) are aligned to one another.

14. A method for operating the device (1600, 1700) of any one of claims 11 to 13, the method comprising:
feeding a first mesh (604) and a second mesh (606) between the first roller (1602) and the second roller (1604) to bond the first mesh (604) with the second mesh (606) forming the first seal, a pocket (608) formed between the first mesh (604) and the second mesh (606);
injecting a sorbent (610) into the pocket (608) by the tube (1614) arranged between the first roller (1602) and the second roller (1604); and
sealing the pocket (608) by the sealer (1616) forming the second seal that is not parallel to the first seal.

15. The method of claim 14, further comprising feeding a mesh (1710) between the third roller (1702) and the fourth roller (1704) to fold the mesh (1710) into the first mesh (604) and the second mesh (606).
